# EUROPEAN PATENT SPECIFICATION

(11) **EP 1 263 633 B1**
(45) Date of publication and mention of the grant of the patent: **12.10.2005**
(21) Application number: 01914854.3
(22) Date of filing: 05.03.2001
(51) Int. Cl.: B60T 7/10

(54) **STEERING WHEEL ACTUATED BRAKE CONTROL**
LENKRADBETÄTIGTE BREMSSTEUERUNG
COMMANDE DE FREINAGE DOTEE D'UNE SENSIBLITIE AU NIVEAU DU VOLANT DE DIRECTION

(30) Priority: 06.03.2000 CA 2299669
(43) Date of publication of application: 11.12.2002
(73) Proprietor: Groupe Newtech International Inc., Québec J7C 3V3 (CA)
(72) Inventor: CONSTANS, Alain, Terrebonne, Québec J6Y 1C9 (CA)
(74) Representative: Casalonga, Axel
(86) International application number: PCT/CA2001/000279
(87) International publication number: WO 2001/066392

(56) References cited:
- EP-A- 1 078 831
- DE-A- 4 301 292
- DE-C- 3 708 094
- US-A- 4 077 487
- US-A- 4 078 628
- US-A- 4 143 734
- US-A- 5 129 492
- US-A- 5 335 743
- US-A- 5 666 857

## Description

### BACKGROUND OF THE INVENTION

### 1. Field of the Invention

The present invention relates to brake systems and, more particularly, to the adaptation of sensors thereto for accelerating the actuating thereof.

### 2. Description of the Prior Art

In the world of automotive industry, the brakes are controlled by means of a brake pedal which mechanically actuates a hydraulic or pneumatic master cylinder. This master cylinder converts the mechanical effort of a driver in hydraulic or pneumatic pressure, which will actuate receiving pistons disposed in the brake of each wheel.

The disadvantage of having a pedal as interface between the driver and the braking system is the time required for the driver to change pedals to initiate the braking. When driving at a stable speed, the driver regulates the velocity of the vehicle by modulating the position of the accelerator pedal with his right foot, the left foot being reserved for the actuating of the shifting to change the gears of the mechanical gear box, or else the left foot is not used if the vehicle is equipped with an automatic transmission.

Each time a driver is brought to stop his vehicle, he must carry out three operations before the vehicle actually reaches the braking phase. First, he must completely let go of the accelerator pedal. Second, he must change the position of his right foot to bring it in front of the brake pedal. Third, he must apply pressure on the brake pedal to supply the brakes with brake fluid for the actuating thereof. At that point, the vehicle reaches the braking phase. The time elapsed during the three first maneuvers represents a traveled distance during which the vehicle has not attained its braking phase. In case of emergency braking, the elapsed time may prove to be costly and may even endanger the life of the driver.

Different apparatuses have been provided to assist the known braking systems. For instance, there exists an electronic system of brake control which intervenes in case of wheel blocking. This system is referred to as Anti-Blocking System, i.e. ABS. The electronic system controls the brakes directly, during its intervention, but the interface of the driver is still the brake pedal.

Strain gauge sensors have been used in order accelerate the attainment of the braking phase of a vehicle. International Publication No. WO 99/41565, published August 19, 1999 by Maubant and Rancourt, discloses a strain gauge sensor connected to internal mechanical amplification to be used to measure the deflection of a beam. In an embodiment, this sensor may be mounted on a brake pedal in order to establish the value of brake torque to be applied to the brakes.

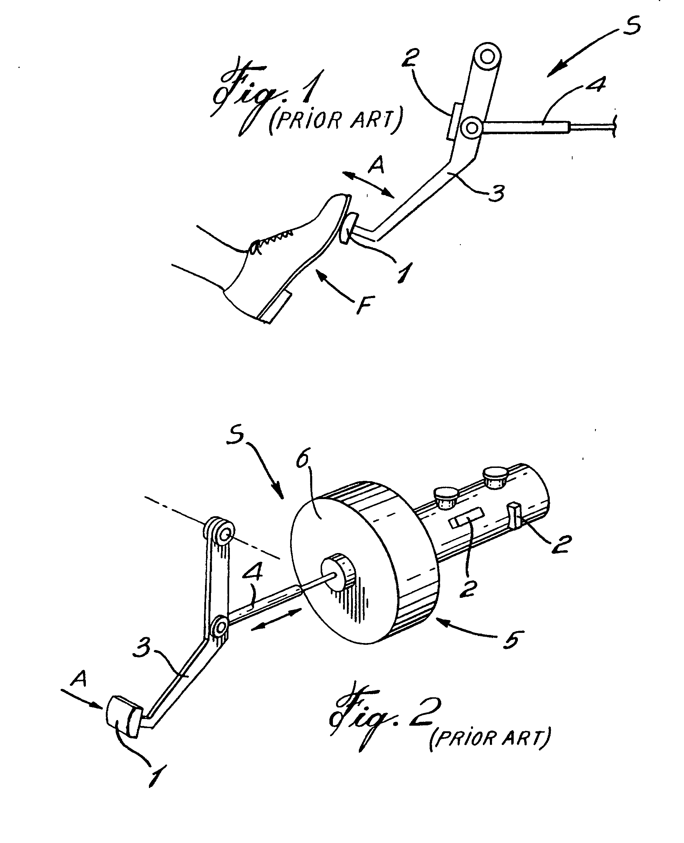

As illustrated in Fig. 1 (representing the prior art), such a brake system is shown at S and comprises a brake pedal 1 at an end of a brake lever 3, which is pivotally mounted to the vehicle frame. A strain gauge sensor 2 is secured to the brake lever 3 in proximity of the coupling axis of the push rod 4 of a master cylinder (not shown), thereby defining a sensitivity brake pedal. The brake system S is actuated by a driver exerting varying pressure on the brake pedal 1 with his foot F in the directions shown by arrow A. The strain gauge sensor 2 measures in real time the deflection (or deformation) of the brake lever 3, which will help establish the control force exerted by the driver on the brake pedal 1. An electronic processing unit (not shown), to which the strain gauge sensor 2 is wired, receives the deformation input signal and interprets it to determine an electronic value of power assistance, which will be supplied in braking torque to each brake.

A first advantage of the above described apparatus resides in that the use of electrical signal to actuate the braking results in a gain of part of the time elapsed during the transmission of hydraulic or pneumatic pressure to brakes. This amount of time, although seemingly negligible, is valuable in the event of emergency braking, as the brakes react in real time as the driver touches the brake pedal 1.

Referring to Fig. 2 (also representing the prior art), a variation of the above described apparatus consists in placing strain gauge sensors 2 on the master cylinder 5, whose deformation, resulting from the internal pressure of brake fluid, is measured. As illustrated, the master cylinder 5 comprises a power booster 6, which is, however, compulsory in this embodiment. The master cylinder 5, when actuated by the braking pedal 1 in the direction shown at A, is subject to deformation which is picked up by the sensor 2 which will generate an electrical signal proportional to the fluid pressure in the master cylinder 5. This device allows for the securing of the strain gauge sensors 2 on an idle member, thereby providing advantages with regards to stability and repetition of the signal.

Although the use of strain gauge sensors has accelerated the braking time of vehicles, an important amount of time is lost in attaining the braking phase by having a pedal interface.

U.S. Patent 5, 335,743 to Gillbrand et al. discloses a steering wheel having a thumb actuated control member which is embedded in a spoke of the steering wheel and which is tiltable to control various driving functions. A strain gauge sensor supplies a signal to a control unit proportional to acceleration or deceleration, depending on the degree of bending of the upper arm of the control.

### SUMMARY OF THE INVENTION

It is therefore an aim of the present invention to provide an apparatus for accelerating the attainment of the braking phase by providing manual braking control.

Therefore, in accordance with the present invention, there is provided an apparatus for controlling the braking of a vehicle having a brake system, comprising a brake actuating member mounted to the vehicle within hand reach of a driver; sensor means adapted for being disposed in communication with the brake actuating member; processing means being connected to said sensor means for receiving input therefrom and for proportionally power-assisting the brake system of the vehicle; and whereby the driver, by exerting varying pressure by hand on the brake actuating member, controls the braking of the vehicle.

Also in accordance with the present invention, there is provided an apparatus for controlling the braking of a vehicle having a brake system, comprising sensor means adapted for being disposed on a portion of a steering column system for measuring deformation thereof; processing means being connected to said sensor means for receiving deformation input therefrom and for proportionally power-assisting the brake system of the vehicle; and whereby a driver, by exerting varying pressure by hand on said steering column system through a steering wheel, controls the braking of the vehicle.

Also in accordance with the present invention, there is provided an apparatus for controlling the braking of a vehicle having a brake system, and comprising at least a lever plate adjacent a rim of a steering wheel; sensor means adapted for being disposed on said lever plate for measuring deformation thereof; processing means being connected to said sensor means for receiving deformation input therefrom and for proportionally power-assisting the braking system of the vehicle; and whereby a driver, by exerting varying pressure on said lever plate by hand while holding said rim, controls the braking of the vehicle.

### BRIEF DESCRIPTION OF THE DRAWINGS

Having thus generally described the nature of the invention, reference will now be made to the accompanying drawings, showing by way of illustration a preferred embodiment thereof, and in which:
Fig. 1 is a schematic side elevational view illustrating a brake pedal with a strain gauge sensor of the prior art;
Fig. 2 is a schematic perspective view of a brake pedal and a master cylinder with strain gauge sensors on the master cylinder in accordance with the prior art;
Fig. 3a is a schematic side elevational view of a strain gauge sensor mounted on a steering wheel in accordance with the present invention;
Fig. 3b is a schematic front elevational view of the steering wheel of Fig. 3a;
Fig. 4 is a schematic side elevational view of the strain gauge sensors mounted on a housing of a steering column in accordance with the present invention;
Fig. 5a is a schematic top plan view of the strain gauge sensors mounted on lever plates in accordance with the present invention;
Fig. 5b is a schematic, fragmentary, side elevational segmented view of Fig. 5a;
Fig. 5c is a schematic perspective view of Fig. 5a; and
Fig. 6 is a schematic side elevational view of a lever plate having a strain gauge sensor mounted to a dashboard.

### DESCRIPTION OF THE PREFERRED EMBODIMENTS

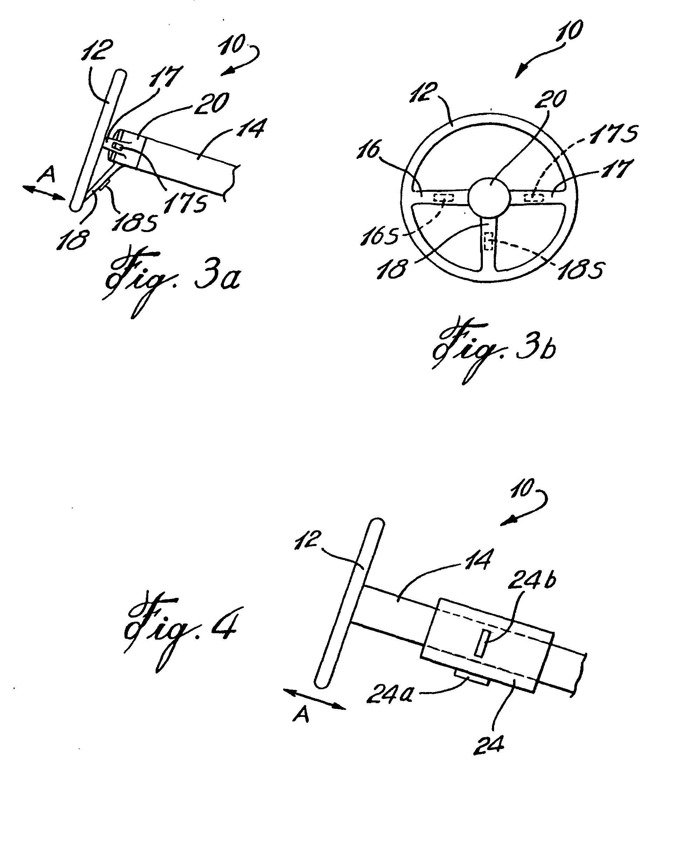

Referring now to the drawings and, more particularly, to Figs. 3a and 3b, a steering wheel is generally shown at 10. The steering wheel 10 is comprised of a rim 12 mounted to a steering column 14 by horizontal spokes 16 and 17 and a vertical spoke 18 converging at a hub portion 20. Strain gauge sensors 16S, 17S and 18S are secured to the horizontal spokes 16, 17 and the vertical spoke 18, respectively. When the driver exerts a push or a pull on the steering wheel 10 as shown by arrow A, the horizontal spokes 16 and 17 and the vertical spoke 18 are subject to deformation, which is picked up by the strain gauge sensors 16S, 17S and 18S. A signal is then sent to a processing unit (not shown) to which the strain gauge sensors 16S, 17S and 18S are wired. The processing unit will immediately power-assist the brakes in outputting brake torque proportionally to the driver's input, whether it be through the master cylinder or directly to the brakes.

The advantage of the above described embodiment is that the driver does not lose time in displacing his right foot from the accelerator pedal to the brake pedal in the event of an emergency braking. It is also well known that for most people, the eye-hand reaction is more rapid than the eye-foot response. Thus an important gain is achieved on the braking system reaction time, which results in a decrease of the traveled distance by the vehicle between the instant of the braking decision and the effective supply of brake torque. Furthermore, a gain of time may be achieved in the processing of the braking information. In the prior art, the driver builds hydraulic pressure in the master cylinder by actuating the brake pedal, which pressure is transmitted via distribution lines to each brake. As explained above, the strain gauge sensors may be directly connected to each brake through the processing unit, whereby the braking command is outputted generally instantaneously to the brakes.

Referring now to Fig. 4, another embodiment of the present invention is illustrated and is also for controlling the brakes in response to pressure exerted on the steering wheel 10 by the driver. The steering column 14 is shown supported in a housing 24. Strain gauge sensors 24a and 24b are mounted to the housing 24 such as to measure the deformation of the steering column 14, in response to the driver's pressure in the A directions on the steering wheel 10. The sensor 24a, which measures the axial deformation, and the sensor 24b, which measures the radial deformation, are electrically connected, to a processing unit (not shown). The advantage of this embodiment resides in the strain gauge sensors being idle as they are on the housing 24 of the steering column 14. This results in a simplified mounting of the strain gauge sensors as well as increased stability and repetition in signal delivery.

Referring now to Figs. 5a, 5b and 5c, still another embodiment of the present invention is illustrated. A pair of opposed lever plates 26 and 27 are mounted to the hub portion 20 of the steering wheel 10. The lever plates 26 and 27 are placed on the steering wheel 10 to correspond with the positioning of the hands H of the driver. Strain gauge sensors 26a and 27a are mounted to the lever plates 26 and 27, respectively, and are electrically wired to a processing unit (not shown). As these lever plates 26 and 27 are mounted to the hub 20 of the steering wheel 10, they will rotate therewith. As best shown in Fig. 5b, the driver will squeeze the lever plate 30 and the rim 12 with his hand H to deflect the lever plate 27. As explained previously, the deformation is picked up by the strain gauge sensor 27a, which will generate braking torque through the processing unit. It is observed that the driver may keep steering the vehicle while braking.

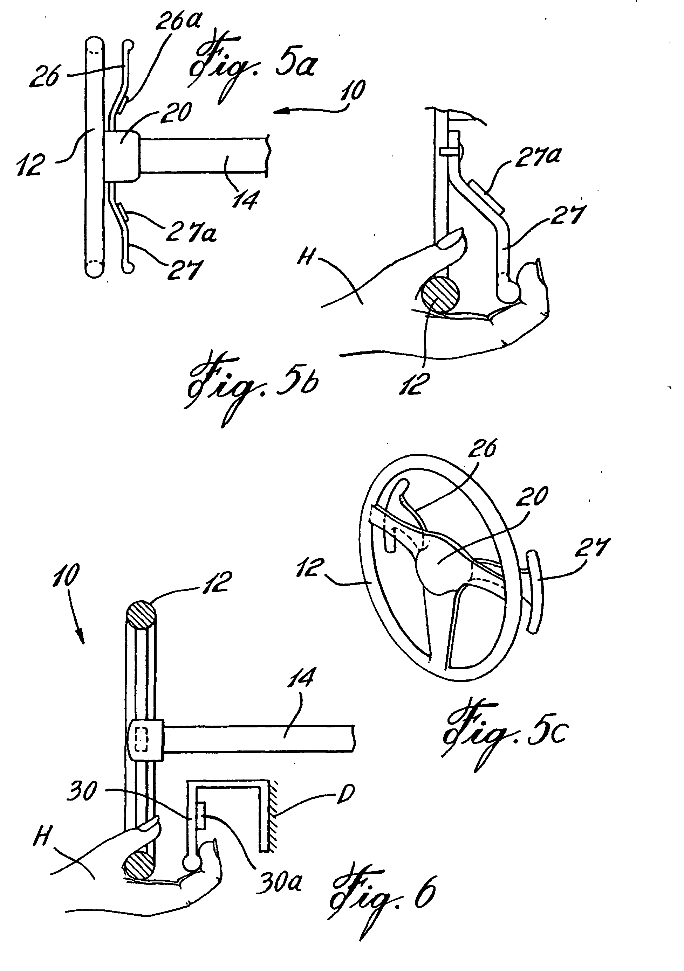

Referring now to Fig. 6, a still further embodiment of the present invention is depicted. In this case, a lever plate 30 is mounted to the dashboard D of the vehicle. A strain gauge sensor 30A is secured on the lever plate 30 and is electrically wired to the processing unit (not shown). By squeezing the rim 12 and the lever plate 30 with hand H, the braking will be actuated.

It is noted that the embodiments described in Figs. 3a and 3b, Fig. 4, Figs. 5a, 5b and 5c and Fig. 6 may be used to achieve a directional braking control by picking up vectorial information from each respective strain gauge sensor. In such a case, the braking control signal outputted to the brakes is no longer the same value for each brake as it becomes differential. For instance, a greater force applied on the lever plate 26 with respect to the lever plate 27 of Fig. 5a may be translated into a greater braking torque applied to the brakes of the left side of the vehicle. This differential braking torque will allow the modification of the trajectory of the vehicle towards the left or the right.

## Claims

1. An apparatus for controlling the braking of a vehicle having a brake system, comprising:
a brake actuating member comprising at least one lever member (26,27,30) mounted to the vehicle within hand reach of a driver;
a strain gauge sensor (26a,27a,30a) on the lever member (26,27,30) for measuring deformation of said lever member (26,27,30); and
processing means being connected to said strain gauge sensor (26a,27a,30a) for receiving input therefrom and for proportionally power-assisting the brake system of the vehicle;
so that the driver can, by exerting varying pressure by hand on the brake actuating member, control the braking of the vehicle.

2. The apparatus according to, claim 1 wherein said lever member 26,27) is mounted to a steering wheel (12) of the vehicle, such as to rotate therewith.

3. The apparatus according to claim 1, wherein said lever member (30) is secured to a dashboard of the vehicle.

4. The apparatus according to claim 1, wherein said strain gauge sensor (26a,27a,30a) measures at least one of axial deformation and radial deformation of the brake actuating member.

5. The apparatus according to claims 1 to4, wherein said input from said strain gauge sensor (26a,27a,30a) is vectorial, for differentially controlling the braking of the vehicle.

6. The apparatus according to claim2, wherein said at least one lever member is secured to a portion of said steering wheel (12), whereby it turns therewith for allowing the driver to turn the steering wheel (12) while controlling the braking of the vehicle with said lever members (26,27).

7. The apparatus according to claim6, wherein said lever member (26) is secured to a hub portion of said steering wheel.

## Patentansprüche

1. Vorrichtung zur Steuerung des Bremsvorgangs eines Fahrzeugs mit einem Bremssystem, welche Folgendes umfasst:
ein Teil zur Bremsbetätigung, das mindestens ein Hebelteil (26, 27, 30) aufweist, das an dem Fahrzeug in Handreichweite eines Fahrers montiert ist;
einen Dehnungsmesssensor (26a, 27a, 30a) auf dem Hebelteil (26, 27, 30), um eine Deformation besagten Hebelteils (26, 27, 30) zu messen; und
Processing-Mittel, welche mit dem Dehnungsmesssensor (26a, 27a, 30a) verbunden sind, um von demselben Input zu bekommen und das Bremssystem des Fahrzeugs mit einer dazu proportionalen Kraft zu unterstützen;
so dass der Fahrer, indem er von Hand variierenden Druck auf das Teil zur Bremsbetätigung ausübt, den Bremsvorgang des Fahrzeugs steuern kann.

2. Vorrichtung nach Anspruch 1, wobei das Hebelteil (26, 27) so an ein Lenkrad (12) des Fahrzeugs montiert ist, dass es mit demselben rotiert.

3. Vorrichtung nach Anspruch 1, wobei das Hebelteil (30) an einem Armaturenbrett des Fahrzeugs befestigt ist.

4. Vorrichtung nach Anspruch 1, wobei der Dehnungsmesssensor (26a, 27a, 30a) von einer axialen Deformation und einer radialen Deformation des Teils zur Bremsbetätigung wenigstens eine misst.

5. Vorrichtung nach Ansprüchen 1 bis 4, wobei der Input von dem Dehnungsmesssensor (26a, 27a, 30a) vektoriell ist, um den Bremsvorgang des Fahrzeugs differential zu steuern.

6. Vorrichtung nach Anspruch 2, wobei mindestens ein Hebelteil an einem Teil des Lenkrads (12) befestigt ist, wodurch es sich mit demselben dreht, um dem Fahrer zu gestatten, das Lenkrad (12) zu drehen, während er den Bremsvorgang des Fahrzeugs mit den Hebelteilen (26, 27) steuert.

7. Vorrichtung nach Anspruch 6, wobei das Hebelteil (26) an einem Nabenteil des Lenkrads befestigt ist.

## Revendications

1. Dispositif de commande du freinage d'un véhicule possédant un système de freinage, comprenant :
un élément d'actionnement de frein comprenant au moins un élément formant levier (26, 27, 30) monté dans le véhicule, à portée de main du conducteur ;
un capteur de force (26a, 27a, 30a) placé sur l'élément formant levier (26, 27, 30) pour mesurer la déformation dudit élément formant levier (26, 27, 30) ; et
un moyen de traitement étant connecté audit capteur de force (26a, 27a, 30a) pour recevoir une entrée de celui-ci et pour assister proportionnellement le système de freinage du véhicule ;
de sorte que le conducteur peut, en exerçant une pression variable à la main sur l'élément d'actionnement de frein, commander le freinage du véhicule.

2. Dispositif selon la revendication 1, dans lequel ledit élément formant levier (26, 27) est monté sur un volant (12) du véhicule, de manière à tourner avec ce dernier.

3. Dispositif selon la revendication 1, dans lequel ledit élément formant levier (30) est fixé à une planche de bord du véhicule.

4. Dispositif selon la revendication 1, dans lequel ledit capteur de force (26a, 27a, 30a) mesure au moins un paramètre parmi la déformation axiale et la déformation radiale de l'élément d'actionnement de frein.

5. Dispositif selon les revendications 1 à 4, dans lequel ladite entrée provenant dudit capteur de force (26a, 27a, 30a) est vectorielle, pour commander de façon différentielle le freinage du véhicule.

6. Dispositif selon la revendication 2, dans lequel ledit au moins un élément formant levier est attaché à une partie dudit volant (12), grâce à quoi il tourne avec ce dernier pour permettre au conducteur de faire tourner le volant (12) tout en commandant le freinage du véhicule avec ledit élément formant levier (26, 27).

7. Dispositif selon la revendication 6, dans lequel ledit élément formant levier (26) est attaché à une partie moyeu dudit volant.
